(19) Europäisches Patentamt / European Patent Office / Office européen des brevets

(11) **EP 2 328 212 A1**

(12) **EUROPEAN PATENT APPLICATION**

(43) Date of publication:
01.06.2011 Bulletin 2011/22

(51) Int Cl.:
$H01M\ 4/04$ [(2006.01)] $\quad H01M\ 10/052$ [(2010.01)]
$H01M\ 4/485$ [(2010.01)] $\quad H01M\ 4/131$ [(2010.01)]
$H01M\ 4/1391$ [(2010.01)] $\quad C01G\ 23/00$ [(2006.01)]

(21) Application number: 10192516.2

(22) Date of filing: 25.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.11.2009 JP 2009268784

(71) Applicant: NIPPON CHEMICAL INDUSTRIAL
COMPANY LIMITED
Tokyo 136-8515 (JP)

(72) Inventor: Awano, Hidekazu
Koto-ku,
Tokyo 136-8515 (JP)

(74) Representative: Evans, Marc Nigel et al
Page White & Farrer
Bedford House
John Street
London, WC1N 2BF (GB)

(54) **Method for manufacturing lithium titanate for lithium secondary battery active material**

(57) The present invention provides a method for manufacturing lithium titanate for a lithium secondary battery active material that can provide excellent rapid charge and discharge characteristics to a lithium secondary battery when used as a negative electrode active material, by which method lithium titanate that is a single phase by X-rays can be obtained. The method for manufacturing lithium titanate for a lithium secondary battery active material according to the present invention comprises a first step of preparing a mixture comprising a lithium compound, and anatase type titanium dioxide obtained by a sulfuric acid method and having a specific surface area of 10.0 to 50.0 $m^2/g$ as measured by a BET method; a second step of pressure-molding the mixture to prepare a reaction precursor; a third step of firing the reaction precursor; and a fourth step of pulverizing a fired product obtained in the third step by a gas-flow pulverizer to obtain lithium titanate represented by a general formula: $Li_xTi_yO_{12}$, having an average particle diameter of 3.0 $\mu$m or less.

Figure 1

EP 2 328 212 A1

**Description**

BACKGROUND OF THE INVENTION

Field of the Invention

The present invention relates to a method for manufacturing lithium titanate for a lithium secondary battery active material.

Description of the Related Art

A lithium secondary battery using $Li_4Ti_5O_{12}$ among lithium titanates, lithium-titanium complex oxides, as an electrode active material has a voltage of about 1.55 V based on lithium, and the volume expansion of the lithium secondary battery during charge and discharge is small. Thus, the lithium secondary battery is known to have a long life. Therefore, this lithium titanate is a material that receives particular attention in the fields of hybrid electric vehicles (HEVs), and large batteries, such as a stationary type. In addition, this lithium titanate can be used for a positive electrode and a negative electrode, and is particularly promising as a negative electrode active material.

A method of, using lithium hydroxide or lithium carbonate as a lithium compound, firing a mixture of this lithium compound and titanium oxide at 700°C to 1600°C is disclosed as a method for manufacturing lithium titanate (for example, see Japanese Patent Laid-Open No. 6-275263).

In addition, a method of dissolving all or part of a lithium compound in a solvent by mixing titanium oxide and the solvent, drying the mixture to prepare a mixed solid, calcining this mixed solid to prepare a composition composed of $TiO_2$ and $Li_2TiO_3$, or a composition composed of $TiO_2$, $Li_2TiO_3$, and $Li_4Ti_5O_{12}$, and then subjecting this composition to main firing is disclosed as a method for manufacturing lithium titanate (for example, see Japanese Patent Laid-Open No. 2001-213622).

Further, a method of compression-molding a mixture of a lithium compound and titanium oxide, calcining the obtained molded product to prepare a composition composed of $TiO_2$ and $Li_2TiO_3$, or a composition composed of $TiO_2$, $Li_2TiO_3$, and $Li_4Ti_5O_{12}$, and then subjecting this composition to main firing is disclosed as a method for manufacturing lithium titanate (for example, see Japanese Patent Laid-Open No. 2000-302547).

However, a problem of the above methods for manufacturing lithium titanate has been that it is difficult to obtain lithium titanate that is a single phase by X-rays. In addition, the development of lithium titanate that can provide excellent rapid charge and discharge characteristics to a lithium secondary battery when used as a negative electrode active material has been desired.

Accordingly, it is an object of the present invention to provide a method for manufacturing lithium titanate for a lithium secondary battery active material that can provide excellent rapid charge and discharge characteristics to a lithium secondary battery when used as a negative electrode active material, by which method lithium titanate that is a single phase by X-rays, in other words, detected as a single phase in X-ray diffraction analysis, can be obtained.

SUMMARY OF THE INVENTION

In order to solve the above problems, the present inventors have diligently studied to find that lithium titanate that is a single phase by X-rays can be obtained by pressure-molding a mixture comprising anatase type titanium dioxide having a specific surface area in a particular range as measured by the BET method and a lithium compound and then firing this mixture, that lithium titanate with a sharp particle size distribution is obtained by pulverizing the fired product of lithium titanate by a gas-flow pulverizer, and further that a lithium secondary battery comprising the obtained lithium titanate as a negative electrode active material particularly has excellent rapid charge and discharge characteristics, leading to the completion of the present invention.

Specifically, a method for manufacturing lithium titanate for a lithium secondary battery active material according to the present invention comprises a first step of preparing a mixture comprising a lithium compound, and anatase type titanium dioxide obtained by a sulfuric acid method and having a specific surface area of 10.0 to 50.0 $m^2$/g as measured by a BET method; a second step of pressure-molding the mixture to prepare a reaction precursor; a third step of firing the reaction precursor; and a fourth step of pulverizing a fired product obtained in the third step by a gas-flow pulverizer to obtain lithium titanate represented by a general formula: $Li_xTi_YO_{12}$, where a Li/Ti atomic ratio is in the range of 0.70 to 0.90, $3.0 \leq x \leq 5.0$, and $4.0 \leq y \leq 6.0$, having an average particle diameter of 3.0 $\mu$m or less.

The mixture prepared in the first step preferably has a specific volume of 1.30 ml/g or more.

In the third step, a firing temperature of the reaction precursor is preferably 600°C or more and 900°C or less.

The gas-flow pulverizer is preferably a jet mill.

The anatase type titanium dioxide preferably has a sulfuric acid radical content of 100 ppm or more and 2500 ppm or less in terms of sulfur atoms.

The anatase type titanium dioxide preferably has a chlorine content of 1500 ppm or less.

The method for manufacturing lithium titanate for a lithium secondary battery active material according to the present invention comprises a first step of preparing a mixture comprising a lithium compound, and anatase type titanium dioxide obtained by a sulfuric acid method and having a specific surface area of 10.0 to 50.0 $m^2/g$ as measured by a BET method; a second step of pressure-molding the mixture to prepare a reaction precursor; a third step of firing the reaction precursor; and a fourth step of pulverizing a fired product obtained in the third step by a gas-flow pulverizer to obtain lithium titanate represented by a general formula: $Li_xTi_yO_{12}$, where a Li/Ti atomic ratio is in the range of 0.70 to 0.90, $3.0 \leq x \leq 5.0$, and $4.0 \leq y \leq 6.0$, having an average particle diameter of 3.0 $\mu$m or less, and therefore, lithium titanate that is a single phase by X-rays is obtained. In addition, a lithium secondary battery using this lithium titanate as a negative electrode active material exhibits particularly excellent rapid charge and discharge characteristics.

BRIEF DESCRIPTION OF THE DRAWINGS

FIG. 1 is a particle size distribution of the lithium titanate obtained in Example 5, measured by a laser scattering particle size distribution measurement apparatus;

FIG. 2 is a particle size distribution of lithium titanate obtained in Comparative Example 3, measured by the laser scattering particle size distribution measurement apparatus; and

FIG. 3 is an X-ray diffraction diagram of lithium titanate obtained in Example 2 and comparative Example 5.

DETAILED DESCRIPTION OF THE PREFERRED EMBODIMENT

The best mode of the method for manufacturing lithium titanate for a lithium secondary battery active material according to the present invention will be described.

This mode will be specifically described for better understanding of the spirit of the invention, and does not limit the present invention unless otherwise specified.

The method for manufacturing lithium titanate for a lithium secondary battery active material according to the present invention is a method comprising the first step of preparing a mixture comprising a lithium compound, and anatase type titanium dioxide obtained by a sulfuric acid method and having a specific surface area of 10.0 to 50.0 $m^2/g$ as measured by the BET method; the second step of pressure-molding the above mixture to prepare a reaction precursor; the third step of firing the above reaction precursor; and the fourth step of pulverizing the fired product obtained in the above third step by a gas-flow pulverizer to obtain lithium titanate represented by the general formula: $Li_xTi_yO_{12}$, where the Li/Ti atomic ratio is in the range of 0.70 to 0.90, $3.0 \leq x \leq 5.0$, and $4.0 \leq y \leq 6.0$, having an average particle diameter of 3.0 $\mu$m or less.

(First Step)

In the method for manufacturing lithium titanate for a lithium secondary battery active material according to the present invention, the first step is the step of mixing a predetermined amount of a lithium compound and anatase type titanium dioxide obtained by a sulfuric acid method and having a specific surface area of 10.0 to 50.0 $m^2/g$ as measured by the BET method to prepare a uniform mixture comprising these lithium compound and anatase type titanium dioxide.

In the first step, for example, inorganic lithium compounds, such as lithium hydroxide, lithium carbonate, and lithium nitrate, are preferably used as the lithium compound. Among these lithium compounds, lithium carbonate is preferred because it is industrially easily available and is inexpensive.

The lithium compound preferably has an average particle diameter of 1.0 $\mu$m or more and 20 $\mu$m or less, more preferably 1.0 $\mu$m or more and 10.0 $\mu$m or less, as a value obtained by a laser light scattering method.

The reason why the lithium compound more preferably has an average particle diameter of 1.0 $\mu$m or more and 20 $\mu$m or less as a value obtained by a laser light scattering method is that if the lithium compound has an average particle diameter in this range, a lithium secondary battery comprising, as a component, lithium titanate manufactured using this lithium compound, particularly a lithium secondary battery comprising the lithium titanate as a negative electrode active material, has improved rapid charge and discharge performance.

Titanium dioxide is usually industrially manufactured by a chlorine method or a sulfuric acid method. In the present invention, titanium dioxide manufactured by a sulfuric acid method is used. The sulfuric acid method in the method for manufacturing titanium dioxide is a method of dissolving ilmenite ore ($FeTiO_3$), a raw material, in sulfuric acid to make the titanium portion a soluble salt, then performing hydrolysis, precipitating the hydrolysate as metatitanic acid, a precursor of titanium dioxide, and firing this metatitanic acid to manufacture titanium dioxide.

The crystal structure of titanium dioxide is broadly divided into an anatase type and a rutile type. In the present invention, the anatase type is used in terms of particularly good reactivity. In the present invention, the content of the anatase type in titanium dioxide should be 90% by weight or more.

In the present invention, anatase type titanium dioxide having a specific surface area of 10.0 to 50.0 $m^2/g$ as measured by the BET method is used, and anatase type titanium dioxide having a specific surface area of 20.0 to 40.0 $m^2/g$ is preferably used.

The reason why anatase type titanium dioxide having a specific surface area of 10.0 to 50.0 $m^2/g$ as measured by the BET method is used is that if the anatase type titanium dioxide has a specific surface area of less than 10.0 $m^2/g$ as measured by the BET method, it is difficult to obtain single-phase lithium titanate, and a lithium secondary battery comprising, as a component, lithium titanate manufactured using this anatase type titanium dioxide has poor rapid charge and discharge performance, and on the other hand, if the anatase type titanium dioxide has a specific surface area of more than 50.0 $m^2/g$ as measured by the BET method, on the contrary, uniform dispersion is difficult, and a lithium secondary battery comprising, as a component, lithium titanate manufactured using this anatase type titanium dioxide has impaired high-temperature storage characteristics.

The anatase type titanium dioxide preferably has an average particle diameter of 3.0 $\mu$m or less, more preferably 0.10 $\mu$m or more and 3.0 $\mu$m or less, as a value obtained by a laser light scattering method.

The reason why the anatase type titanium dioxide more preferably has an average particle diameter of 0.10 $\mu$m or more and 3.0 $\mu$m or less as a value obtained by a laser light scattering method is that if the anatase type titanium dioxide has an average particle diameter in this range, a lithium secondary battery comprising, as a component, lithium titanate manufactured using this anatase type titanium dioxide, particularly a lithium secondary battery comprising the lithium titanate as a negative electrode active material, has improved rapid charge and discharge performance.

Sulfuric acid radicals are irreversibly mixed in such anatase type titanium dioxide as sulfur atoms during manufacture, and their content is preferably 100 ppm or more and 2500 ppm or less, and more preferably 100 ppm or more and 2000 ppm or less.

In the present invention, by actively containing sulfuric acid radicals in the above range in lithium titanate, the final product, the rapid charge and discharge characteristics of a lithium secondary battery comprising this lithium titanate as a negative electrode active material can be further improved.

In addition, the anatase type titanium dioxide preferably has a chlorine content of 1500 ppm or less, more preferably 500 ppm or less, and further preferably 100 ppm or less.

The reason why the chlorine content in the anatase type titanium dioxide is 1500 ppm or less is that if the titanium dioxide has a chlorine content in this range, a lithium secondary battery comprising, as a component, lithium titanate manufactured using this anatase type titanium dioxide, particularly a lithium secondary battery comprising the lithium titanate as a negative electrode active material, has improved rapid charge and discharge performance.

In addition, the mixing ratio of the lithium compound to the anatase type titanium dioxide is preferably in the range of 0.70 to 0.90, more preferably in the range of 0.75 to 0.85, as the molar ratio of lithium atoms in the lithium compound to titanium atoms in the anatase type titanium dioxide (Li/Ti).

The reason why the mixing ratio of the lithium compound to the anatase type titanium dioxide is preferably in the range of 0.70 to 0.90 as the molar ratio of lithium atoms in the lithium compound to titanium atoms in the anatase type titanium dioxide (Li/Ti) is that if the mixing ratio is in this range, a lithium secondary battery comprising, as a component, lithium titanate manufactured using the lithium compound and anatase type titanium dioxide has improved discharge capacity. In addition, if the mixing ratio of the lithium compound to the anatase type titanium dioxide is less than 0.70 or more than 0.90 as the above molar ratio (Li/Ti), a lithium secondary battery comprising, as a component, lithium titanate manufactured using the lithium compound and anatase type titanium dioxide, particularly a lithium secondary battery comprising the lithium titanate as a negative electrode active material, has reduced discharge capacity.

The method for mixing the lithium compound, and the anatase type titanium dioxide may be either a wet mixing method of mixing both materials in a solvent, or a dry mixing method of mixing both materials without using a solvent, as long as a uniform mixture can be prepared. But, the obtained mixture preferably has a specific volume of 1.30 ml/g or more, more preferably 1.30 ml/g or more and 2.00 ml/g or less.

The reason why the mixture preferably has a specific volume of 1.30 ml/g or more is that the firing of the reaction precursor (the third step) described later can be performed at a low temperature of 600°C or more and 900°C or less, and therefore, there is no grain growth due to sintering, and fine lithium titanate that is a single phase by X-rays is obtained.

The specific volume in the present invention is obtained by placing 10 g of a sample in a 50 ml graduated cylinder, tapping 500 times, allowing the cylinder to stand, then reading the volume, and calculating the following formula (1), according to a tapping method, based on the apparent density or apparent specific volume method described in JIS-K-5101.

$$\text{specific volume (ml/g)} = V/F \qquad (1)$$

where F represents the mass (g) of the treated sample in the receiver, and V represents the volume (ml) of the sample after the tapping.

(Second Step)

In the method for manufacturing lithium titanate for a lithium secondary battery active material according to the present invention, the second step is the step of pressure-molding the uniform mixture prepared in the first step to prepare a reaction precursor.

The pressure molding machine for pressure-molding the uniform mixture prepared in the first step is not particularly limited as long as it can apply pressure. For example, a tableting machine, a briquetting machine, a roller compactor, and the like are preferably used.

The molding pressure in the pressure molding is different according to the pressure molding machine, the amount of materials fed, and the like, and is not particularly limited. But, it is preferably 5 MPa or more and 200 MPa or less, and more preferably 5 MPa or more and 180 MPa or less.

The reason why the molding pressure in the pressure molding is preferably 5 MPa or more and 200 MPa or less is that even if the firing of the reaction precursor (the third step) described later is performed at a low temperature of 600°C or more and 900°C or less, fine lithium titanate that is a single phase by X-rays can be obtained.

According to this second step, it is possible to increase the contact area between the lithium compound and the anatase type titanium dioxide to further enhance the reactivity. Therefore, the firing of the reaction precursor (the third step) described later can be performed at a low temperature of 600°C or more and 900°C or less, and therefore, there is no grain growth due to sintering, and fine lithium titanate that is a single phase by X-rays is obtained.

(Third Step)

In the method for manufacturing lithium titanate for a lithium secondary battery active material according to the present invention, the third step is the step of firing the reaction precursor prepared in the second step to obtain a fired product of lithium titanate.

In this third step, the firing temperature of the reaction precursor is preferably 600°C or more and 900°C or less, and more preferably 650°C or more and 850°C or less.

The reason why the firing temperature of the reaction precursor is preferably 600°C or more and 900°C or less is that if the firing temperature is less than 600°C, the reaction of the lithium compound with the anatase type titanium dioxide is not sufficient, and it is difficult to obtain lithium titanate that is a single phase by X-rays, and on the other hand, if the firing temperature is more than 900°C, the sintering and grain growth of the lithium titanate occur, it is difficult to obtain fine lithium titanate even if pulverization treatment is performed in the fourth step described later, and further, the rapid charge and discharge performance of a lithium secondary battery comprising this lithium titanate as a negative electrode active material tends to be impaired.

In addition, the firing time is 1 hour or more, and preferably 1 hour or more and 10 hours or less.

Further, the firing atmosphere is not particularly limited, and the firing of the reaction precursor can be performed in the air, in an oxygen atmosphere, or in an inert gas atmosphere.

In the present invention, the firing may be performed any number of times, as desired. In addition, for the purpose of making the powder properties uniform, one fired once may be pulverized and then fired again.

Then, after the firing, the fired product of lithium titanate is appropriately cooled and recovered.

(Fourth Step)

In the method for manufacturing lithium titanate for a lithium secondary battery active material according to the present invention, the fourth step is the step of pulverizing the fired product obtained in the above third step by a gas-flow pulverizer to obtain lithium titanate represented by the general formula: $Li_xTi_yO_{12}$, where the Li/Ti atomic ratio is in the range of 0.70 to 0.90, $3.0 \leq x \leq 5.0$, and $4.0 \leq y \leq 6.0$, having an average particle diameter of 3.0 $\mu$m or less.

The pulverization treatment by the gas-flow pulverizer is a method of releasing a high-pressure inert gas from a narrow nozzle to generate a high-speed gas flow, which accelerates a roughly pulverized powder to cause the collision of the roughly pulverized powder with each other and the collision of the roughly pulverized powder with a target or a container wall for pulverization.

In this fourth step, by performing pulverization treatment by the gas-flow pulverizer, the pulverized particles after the pulverization treatment are dispersed in the gas flow without aggregation, compared with the case of using a medium pulverizer, such as a ball mill, and therefore, one with a sharp particle size distribution is obtained. In addition, the pulverization treatment by the gas-flow pulverizer also has an advantage that due to weak impact force, such as the collision of the particles with each other, or the collision of the particles with the wall, the distortion of the crystal structure can be reduced, compared with one in which a pulverization raw material is put into the strong collision of mediums, such as a medium mill, and destroyed.

The conditions of the pulverization treatment by the gas-flow pulverizer can be controlled by adjusting the ratio of the gas flow supply to the raw material supply. This ratio of the gas flow supply to the raw material supply is different according to the type of the pulverizer used, but should be determined by appropriately selecting optimal conditions so that lithium titanate having the desired particle diameter is obtained.

Examples of the gas-flow pulverizer include a jet mill, a collision plate type gas-flow pulverizer, a flash dryer, an elbow jet, a turbo classifier, and a free pulverizer. Among these, a jet mill is particularly preferred in terms of a little contamination.

The lithium titanate obtained by pulverizing the fired product has an average particle diameter of 3.0 $\mu$m or less, preferably 0.10 $\mu$m or more and 3.0 $\mu$m or less, as a value obtained by a laser light scattering method. The reason why the lithium titanate obtained by the pulverization treatment has an average particle diameter of 3.0 $\mu$m or less as a value obtained by a laser light scattering method is that if the lithium titanate has an average particle diameter in this range, a lithium secondary battery comprising this lithium titanate as a negative electrode active material has improved rapid charge and discharge performance, and on the other hand, if the lithium titanate after the pulverization treatment has an average particle diameter of more than 3.0 $\mu$m as a value obtained by a laser light scattering method, the lithium secondary battery has decreased rapid charge and discharge performance.

In this manner, according to the present invention, lithium titanate for a lithium secondary battery active material is obtained. In the present invention, classification may be performed as required.
The lithium titanate for a lithium secondary battery active material obtained by the present invention is lithium titanate that is a single phase by X-rays, and is represented by the following general formula (2):

$$Li_xTi_yO_{12} \qquad (2)$$

where the Li/Ti atomic ratio is in the range of 0.70 to 0.90, preferably 0.75 to 0.85, $3.0 \leq x \leq 5.0$, preferably $3.5 \leq x \leq 4.5$, and $4.0 \leq y \leq 6.0$, preferably $4.5 \leq y \leq 5.5$.

In addition, the lithium titanate for a lithium secondary battery active material obtained by the present invention preferably has an average particle diameter of 3.0 $\mu$ or less, more preferably 0.10 $\mu$m or more and 3.0 $\mu$m or less, as a value obtained by a laser light scattering method. In addition, this lithium titanate for a lithium secondary battery active material preferably has a specific surface area of 1.0 to 10.0 $m^2/g$, more preferably 1.0 to 7.0 $m^2/g$, as measured by the BET method. In addition, this lithium titanate for a lithium secondary battery active material preferably has a sulfuric acid radical content of 100 ppm or more and 2500 ppm or less, more preferably 100 ppm or more and 2000 ppm or less, in terms of sulfur atoms. Further, this lithium titanate for a lithium secondary battery active material preferably has a chlorine content of 1500 ppm or less, more preferably 100 ppm or less, and further preferably 100 ppm or less.

The lithium titanate for a lithium secondary battery active material obtained by the present invention can be used for either a positive electrode active material or a negative electrode active material, but is preferably used as a negative electrode active material because a lithium secondary battery using this lithium titanate as a negative electrode active material exhibits particularly excellent rapid charge and discharge characteristics.
In addition, a lithium secondary battery using the lithium titanate for a lithium secondary battery active material obtained by the present invention can be preferably used for hybrid electric vehicles (HEVs), and large batteries, such as a stationary type, and is also preferably used for, in addition, for example, electronic equipment, such as notebook computers, laptop computers, pocket word processors, cellular phones, cordless handsets, portable CD players, radios, liquid crystal televisions, backup power supplies, electric shavers, memory cards, and camcorders, and consumer electronic equipment, such as game equipment.

EXAMPLES

The present invention will be more specifically described below by Examples and Comparative Examples, but the present invention is not limited to the following Examples.

<Titanium Dioxide

Commercial titanium dioxides shown in Table 1 were used.
All anatase type titanium dioxides used in the Examples had an anatase type content of 90% by weight or more.

The average particle diameter was obtained by a laser light scattering method. In addition, after the sample was dissolved in an acid, the sulfur atom content in the titanium dioxide was measured by ICP-AES (inductively coupled plasma-atomic emission spectroscopy). In addition, the chlorine content in the titanium dioxide was measured by an X-ray fluorescence analysis method.

[Table 1]

| | Manufacturing method | Crystal type | Average particle diameter ($\mu$m) | BET specific surface area ($m^2$/g) | Sulfur content (ppm) | Chlorine content (ppm) |
|---|---|---|---|---|---|---|
| Sample A | Sulfuric acid method | Anatase type | 0.31 | 29.8 | 130 | 20 |
| Sample B | Sulfuric acid method | Anatase type | 0.56 | 25.4 | 540 | 15 |
| Sample C | Sulfuric acid method | Anatase type | 0.92 | 32.5 | 1402 | 60 |
| Sample D | Sulfuric acid method | Anatase type | 0.32 | 35.4 | 1850 | 1200 |
| Sample E | Chlorine method | Anatase type | 0.12 | 49.2 | 13 | 2651 |
| Sample F | Sulfuric acid method | Rutile type | 1.21 | 21.0 | 1620 | 501 |
| Sample G | Sulfuric acid method | Anatase type | 0.15 | 51.2 | 3281 | 1222 |
| Sample H | Chlorine method | Rutile type | 0.95 | 15.0 | 8 | 1820 |
| Sample I | Sulfuric acid method | Anatase type | 0.37 | 9.2 | 545 | 20 |

[Example 1]

Titanium dioxide (the sample A shown in Table 1) and lithium carbonate ($Li_2CO_3$, average particle diameter: 9.8 $\mu$m) were mixed so that the molar ratio of lithium atoms in the lithium carbonate to titanium atoms in the titanium dioxide (Li/Ti) was 0.800, and dry mixing by a mixer was repeatedly performed to prepare a uniform mixture having a specific volume shown in Table 2 (the first step).

Then, the obtained mixture was pressure-molded at a pressure of 150 MPa, using a hand press, to prepare a pellet-like reaction precursor (the second step).

Then, the reaction precursor was fired in the air atmosphere at 800°C for 3 hours and cooled, and then, the fired product was recovered (the third step).

Then, the fired product was pulverized by a jet mill (the fourth step). The obtained pulverized product was identified by an X-ray diffractometer (XRD). This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the following formula (3), according to a tapping method, based on the apparent density or apparent specific volume method described in JIS-K-5101.

$$\text{specific volume (ml/g)} = V/F \qquad (3)$$

where F represents the mass (g) of the treated sample in the receiver, and V represents the volume (ml) of the sample after the tapping.

[Example 2]

Titanium dioxide (the sample B shown in Table 1) and lithium carbonate ($Li_2CO_3$, average particle diameter: 9.8 $\mu$m) were mixed so that the molar ratio of lithium atoms in the lithium carbonate to titanium atoms in the titanium dioxide (Li/Ti) was 0.800, and dry mixing by the mixer was repeatedly performed to prepare a uniform mixture having a specific volume shown in Table 2 (the first step).

Then, the obtained mixture was pressure-molded at a pressure of 150 MPa, using the hand press, to prepare a pellet-like reaction precursor (the second step).

Then, the reaction precursor was fired in the air atmosphere at 800°C for 5 hours and cooled, and then, the fired product was recovered (the third step).

Then, the fired product was pulverized by the jet mill (the fourth step). The obtained pulverized product was identified by the X-ray diffractometer. This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 3]

Titanium dioxide (the sample C shown in Table 1) and lithium carbonate ($Li_2CO_3$, average particle diameter: 9.8 $\mu$m) were mixed so that the molar ratio of lithium atoms in the lithium carbonate to titanium atoms in the titanium dioxide (Li/Ti) was 0.800, and dry mixing by the mixer was repeatedly performed to prepare a uniform mixture having a specific volume shown in Table 2 (the first step).

Then, the obtained mixture was pressure-molded at a pressure of 150 MPa, using the hand press, to prepare a pellet-like reaction precursor (the second step).

Then, the reaction precursor was fired in the air atmosphere at 700°C for 5 hours and cooled, and then, the fired product was recovered (the third step).

Then, the fired product was pulverized by the jet mill (the fourth step). The obtained pulverized product was identified by the X-ray diffractometer. This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 4]

Titanium dioxide (the sample D shown in Table 1) and lithium carbonate ($Li_2CO_3$, average particle diameter: 9.8 $\mu$m) were mixed so that the molar ratio of lithium atoms in the lithium carbonate to titanium atoms in the titanium dioxide (Li/Ti) was 0.800, and dry mixing by the mixer was repeatedly performed to prepare a uniform mixture having a specific volume shown in Table 2 (the first step).

Then, the obtained mixture was pressure-molded at a pressure of 150 MPa, using the hand press, to prepare a pellet-like reaction precursor (the second step).

Then, the reaction precursor was fired in the air atmosphere at 750°C for 10 hours and cooled, and then, the fired product was recovered (the third step).

Then, the fired product was pulverized by the jet mill (the fourth step). The obtained pulverized product was identified by the X-ray diffractometer. This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 5]

Titanium dioxide (the sample D shown in Table 1) and lithium carbonate ($Li_2CO_3$, average particle diameter: 9.8 $\mu$m) were mixed so that the molar ratio of lithium atoms in the lithium carbonate to titanium atoms in the titanium dioxide (Li/Ti) was 0.800, and dry mixing by the mixer was repeatedly performed to prepare a uniform mixture having a specific volume shown in Table 2 (the first step).

Then, the obtained mixture was pressure-molded at a pressure of 150 MPa, using the hand press, to prepare a pellet-like reaction precursor (the second step).

Then, the reaction precursor was fired in the air atmosphere at 770°C for 7 hours and cooled, and then, the fired product was recovered (the third step).

Then, the fired product was pulverized by the jet mill (the fourth step). The obtained pulverized product was identified by the X-ray diffractometer. This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Comparative Example 1]

$Li_4Ti_5O_{12}$ having a spinel structure was obtained as in Example 1, except that the sample E shown in Table 1 was used as titanium dioxide.

[Comparative Example 2]

$Li_4Ti_5O_{12}$ having a spinel structure was obtained as in Example 1, except that the sample F shown in Table 1 was used as titanium dioxide.

[Comparative Example 3]

$Li_4Ti_5O_{12}$ having a spinel structure was obtained as in Example 1, except that the second step was not performed.

[Comparative Example 4]

$Li_4Ti_5O_{12}$ having a spinel structure was obtained as in Example 1, except that the fired product was pulverized using a pin mill, instead of the jet mill, in the fourth step.

[Comparative Example 5]

$Li_4Ti_5O_{12}$ having a spinel structure was obtained as in Example 1, except that the sample B shown in Table 1 was used as titanium dioxide and the fired product was pulverized using a hammer mill, instead of the jet mill, in the fourth step.

[Comparative Example 6]

$Li_4Ti_5O_{12}$ having a spinel structure was obtained as in Example 1, except that the sample G shown in Table 1 was used as titanium dioxide.

[Comparative Example 7]

$Li_4Ti_5O_{12}$ having a spinel structure was obtained as in Example 1, except that the sample H shown in Table 1 was used as titanium dioxide.

[Comparative Example 8]

$Li_4Ti_5O_{12}$ having a spinel structure was obtained as in Example 1, except that the sample I shown in Table 1 was used as titanium dioxide.

[Table 2]

| | Type of $TiO_2$ sample used | Li/Ti feed molar ratio | Specific volume of mixture (ml/g) | Pulverizer used |
|---|---|---|---|---|
| Example 1 | A | 0.800 | 1.32 | Jet mill |
| Example 2 | B | 0.800 | 1.60 | Jet mill |

(continued)

| | Type of TiO$_2$ sample used | Li/Ti feed molar ratio | Specific volume of mixture (ml/g) | Pulverizer used |
|---|---|---|---|---|
| Example 3 | C | 0.800 | 1.98 | Jet mill |
| Example 4 | D | 0.800 | 1.55 | Jet mill |
| Example 5 | D | 0.800 | 1.75 | Jet mill |
| Comparative Example 1 | E | 0.800 | 1.28 | Jet mill |
| Comparative Example 2 | F | 0.800 | 1.21 | Jet mill |
| Comparative Example 3 | A | 0.800 | 1.25 | Jet mill |
| Comparative Example 4 | A | 0.800 | 1.26 | Pin mill |
| Comparative Example 5 | B | 0.800 | 1.20 | Hammer mill |
| Comparative Example 6 | G | 0.800 | 1.25 | Jet mill |
| Comparative Example 7 | H | 0.800 | 1.17 | Jet mill |
| Comparative Example 8 | I | 0.800 | 1.31 | Jet mill |

<Evaluation of Lithium Titanate

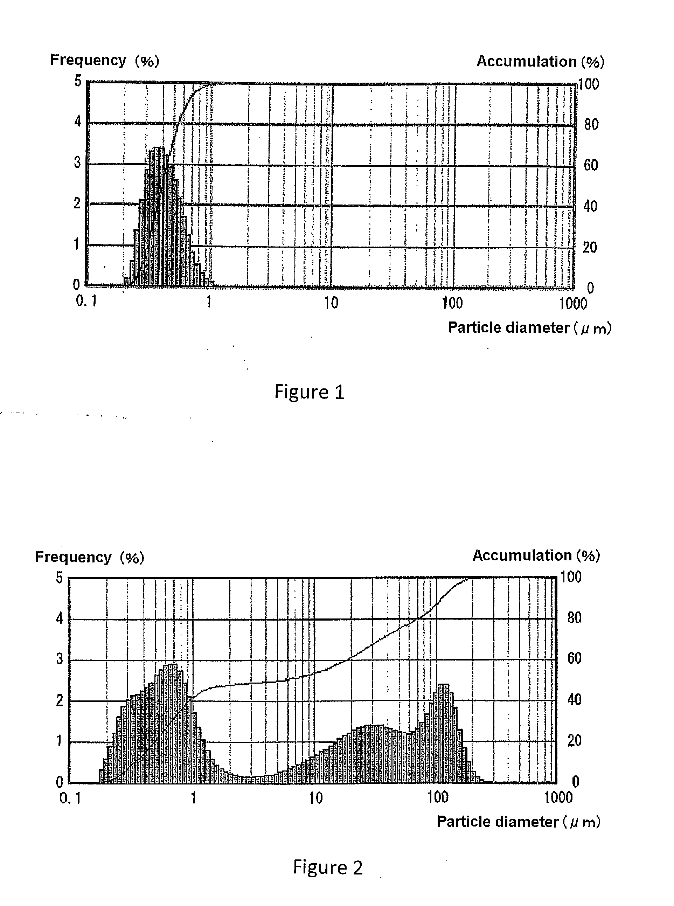

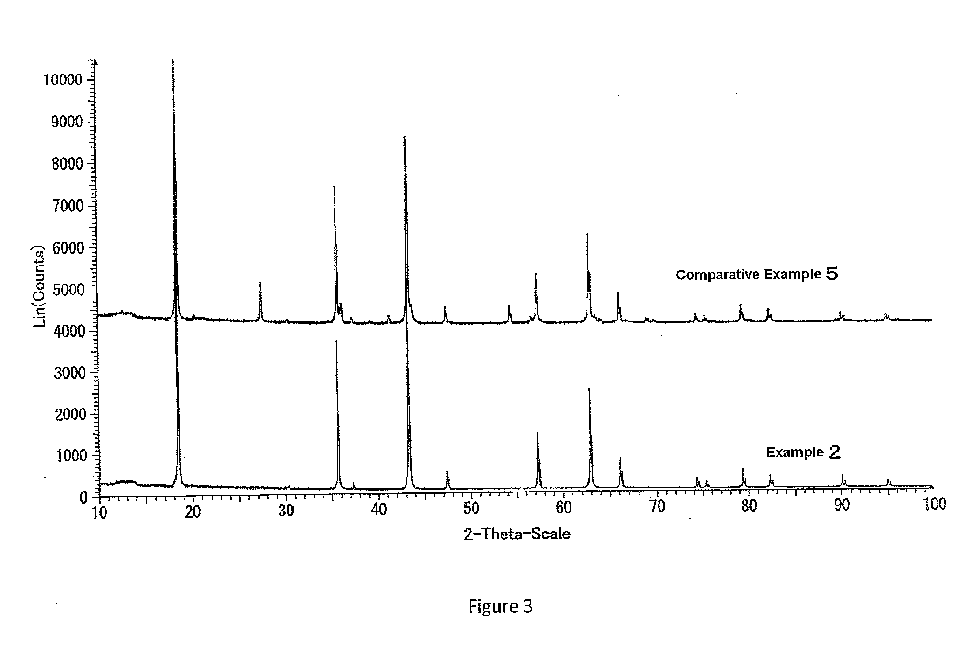

The average particle diameter, the specific surface area by the BET method, the sulfur content, and the chlorine content were measured for the lithium titanates obtained in Examples 1 to 5 and Comparative Examples 1 to 8. In addition, X-ray diffraction analysis was performed, using Cu-K$\alpha$ rays as a source, for the lithium titanates obtained in Examples 1 to 5 and Comparative Examples 1 to 8. The results of these are shown in Table 3.
In addition, the particle size distribution was measured for the lithium titanates obtained in Examples 1 to 5. As a result, all showed a sharp particle size distribution.
A particle size distribution of the lithium titanate obtained in Example 5, measured by a laser scattering particle size distribution measurement apparatus, is shown in FIG. 1. In addition, a particle size distribution of the lithium titanate obtained in Comparative Example 3, measured by the laser scattering particle size distribution measurement apparatus, is shown in FIG. 2.
In addition, an X-ray diffraction diagram of the lithium titanates obtained in Example 2 and Comparative Example 5 is shown in FIG. 3.
The average particle diameter was obtained by a laser light scattering method.
In addition, the sulfur content in the lithium titanate was measured by X-ray fluorescence analysis.
In addition, the chlorine content in the lithium titanate was measured by X-ray fluorescence analysis.
[Table 3]

| | Average particle diameter ($\mu$m) | BET specific surface area ($m^2/g$) | Sulfur content (ppm) | Chlorine content (ppm) | Results of X-ray diffraction |
|---|---|---|---|---|---|
| Example 1 | 2.5 | 3.5 | 119 | 18 | Single phase spinel |
| Example 2 | 0.8 | 5.5 | 496 | 14 | Single phase spinel |

(continued)

| | Average particle diameter ($\mu$m) | BET specific surface area ($m^2/g$) | Sulfur content (ppm) | Chlorine content (ppm) | Results of X-ray diffraction |
|---|---|---|---|---|---|
| Example 3 | 0.2 | 8.9 | 1304 | 55 | Single phase spinel |
| Example 4 | 1.2 | 4.2 | 1698 | 1102 | Single phase spinel |
| Example 5 | 0.6 | 4.5 | 1698 | 1102 | Single phase spinel |
| Comparative Example 1 | 1.3 | 2.0 | 12 | 2434 | Single phase spinel |
| Comparative Example 2 | 2.2 | 3.2 | 1405 | 460 | Containing single phase spinel and rutile type $TiO_2$ |
| Comparative Example 3 | 2.1 | 2.1 | 119 | 18 | Containing single phase spinel and rutile type $TiO_2$ |
| Comparative Example 4 | 2.8 | 2.0 | 119 | 18 | Single phase spinel |
| Comparative Example 5 | 5.1 | 6.0 | 496 | 14 | Single phase spinel |
| Comparative Example 6 | 2.4 | 4.2 | 3012 | 1122 | Single phase spinel |
| Comparative Example 7 | 2.1 | 1.1 | 7 | 1671 | Containing single phase spinel and rutile type $TiO_2$ |
| Comparative Example 8 | 3.8 | 1.0 | 505 | 18 | Containing single phase spinel and rutile type $TiO_3$ |

<Battery Performance

(1) Fabrication of Lithium Secondary Battery

The lithium titanates in Examples 1 to 5, and Comparative Examples 1 to 8 manufactured as described above were used as an active material. 70 parts by weight of the lithium titanate, 15 parts by weight of acetylene black as a conductive aid, 15 parts by weight of polyvinylidene fluoride (PVDF) as a binder, and n-methyl-2-pyrrolidone as a solvent were mixed to prepare an electrode mixture.

This electrode mixture was applied to aluminum foil by a doctor blade method, with a thickness of 0.01 $g/cm^2$ after drying. Then, after vacuum drying at 150°C for 24 hours, the film was roll-pressed to 80% of the thickness of the film immediately after the application, and punched with an area of 1 $cm^2$ to obtain a negative electrode of a coin battery.

Using this negative electrode, and members, such as a separator, a positive electrode, a current collector, fittings, external terminals, and an electrolyte, a lithium secondary battery was fabricated.

A lithium metal plate was used as the positive electrode. A copper plate was used as the current collector. A porous polypropylene film was used as the separator. A solution of $LiPF_6$ dissolved at 1 mol/L in an equal volume mixed liquid of ethylene carbonate and ethyl methyl carbonate was used as the electrolyte.

(2) Charge and Discharge Test

For each coin battery fabricated as described above, a cycle in which the coin battery was charged to 1.0 V and then discharged to 2.0 V at constant current at a current density of 0.2 C at 25°C was repeated three times. Then, the charge and discharge cycle was repeated three times at each of discharge current densities of 0.5 C, 1.0 C, and 2.0 C, and each highest discharge capacity was taken as discharge capacity at each current density. The results are shown in Table 5.

In the evaluation of this charge and discharge test, the insertion reaction of lithium into the negative electrode active material was defined as charge, and the elimination reaction of lithium was defined as discharge.

[Table 4]

|  | Highest discharge capacity | | | |
|---|---|---|---|---|
|  | 0.1C (mAh/g) | 0.5C (mAh/g) | 1.0C (mAh/g) | 2.0C (mAh/g) |
| Example 1 | 165 | 162 | 151 | 140 |
| Example 2 | 167 | 160 | 153 | 142 |
| Example 3 | 168 | 158 | 152 | 144 |
| Example 4 | 164 | 162 | 155 | 142 |
| Example 5 | 169 | 154 | 157 | 148 |
| Comparative Example 1 | 164 | 140 | 140 | 133 |
| Comparative Example 2 | 164 | 145 | 132 | 134 |
| Comparative Example 3 | 158 | 140 | 138 | 132 |
| Comparative Example 4 | 165 | 141 | 138 | 135 |
| Comparative Example 5 | 164 | 143 | 137 | 134 |
| Comparative Example 6 | 166 | 148 | 138 | 132 |
| Comparative Example 7 | 159 | 141 | 138 | 130 |
| Comparative Example 8 | 158 | 140 | 137 | 130 |

From the results in Table 4, it was found that the lithium secondary batteries using the lithium titanates in Examples 1 to 5 as the negative electrode active material had better rapid charge and discharge capacity than the lithium secondary batteries using the lithium titanates in Comparative Examples 1 to 8 as the negative electrode active material.

The method for manufacturing lithium titanate for a lithium secondary battery active material according to the present invention comprises the first step of preparing a mixture comprising a lithium compound, and anatase type titanium dioxide obtained by a sulfuric acid method and having a specific surface area of 10.0 to 50.0 $m^2$/g as measured by the BET method; the second step of pressure-molding the above mixture to prepare a reaction precursor; the third step of firing the above reaction precursor; and the fourth step of pulverizing the fired product obtained in the above third step by a gas-flow pulverizer to obtain lithium titanate represented by the general formula: $Li_xTi_yO_{12}$, where the Li/Ti atomic ratio is in the range of 0.70 to 0.90, $3.0 \leq x \leq 5.0$, and $4.0 \leq y \leq 6.0$, having an average particle diameter of 3.0 $\mu$m or less, and therefore, lithium titanate that is a single phase by X-rays is obtained. In addition, a lithium secondary battery using this lithium titanate as a negative electrode active material exhibits particularly excellent rapid charge and discharge characteristics.

**Claims**

1.  A method for manufacturing lithium titanate for a lithium secondary battery active material, comprising:

   a first step of preparing a mixture comprising a lithium compound, and anatase type titanium dioxide obtained by a sulfuric acid method and having a specific surface area of 10.0 to 50.0 $m^2$/g as measured by a BET method;

a second step of pressure-molding the mixture to prepare a reaction precursor;

a third step of firing the reaction precursor; and

a fourth step of pulverizing a fired product obtained in the third step by a gas-flow pulverizer to obtain lithium titanate represented by a general formula: $Li_xTi_yO_{12}$, wherein a Li/Ti atomic ratio is in the range of 0.70 to 0.90, $3.0 \leq x \leq 5.0$, and $4.0 \leq y \leq 6.0$, having an average particle diameter of 3.0 $\mu$m or less.

2. The method for manufacturing lithium titanate for a lithium secondary battery active material according to claim 1, wherein the mixture prepared in the first step has a specific volume of 1.30 ml/g or more.

3. The method for manufacturing lithium titanate for a lithium secondary battery active material according to claim 1 or 2, wherein in the third step, a firing temperature of the reaction precursor is 600°C or more and 900°C or less.

4. The method for manufacturing lithium titanate for a lithium secondary battery active material according to claim 1 or 2, wherein the gas-flow pulverizer is a jet mill.

5. The method for manufacturing lithium titanate for a lithium secondary battery active material according to claim 1 or 2, wherein the anatase type titanium dioxide has a sulfuric acid radical content of 100 ppm or more and 2500 ppm or less in terms of sulfur atoms.

6. The method for manufacturing lithium titanate for a lithium secondary battery active material according to claim 1 or 2, wherein the anatase type titanium dioxide has a chlorine content of 1500 ppm or less.

Figure 1

Figure 2

Figure 3

**EUROPEAN SEARCH REPORT**

Application Number

EP 10 19 2516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2001 213623 A (TOHO TITANIUM CO LTD) 7 August 2001 (2001-08-07) * paragraphs [0010] - [0035] * | 1-6 | INV. H01M4/04 H01M10/052 H01M4/485 H01M4/131 H01M4/1391 C01G23/00 |
| A | JP 2005 239461 A (ISHIHARA SANGYO KAISHA) 8 September 2005 (2005-09-08) * the whole document * | 1-6 | |
| A | JIE SHU: "Electrochemical behavior and stability of Li4Ti5O12 in a broad voltage window", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 13, no. 10, 11 November 2008 (2008-11-11), pages 1535-1539, XP019724279, ISSN: 1433-0768 * page 1535 * | 1-6 | |
| A | JP 2004 037228 A (SHIGA PREF GOV; GUNZE KK) 5 February 2004 (2004-02-05) * paragraph [0018] * | 1 | TECHNICAL FIELDS SEARCHED (IPC) H01M C01G |

The present search report has been drawn up for all claims

| Place of search | Date of completion of the search | Examiner |
|---|---|---|
| The Hague | 24 January 2011 | Langouët, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 10 19 2516

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2011

| Patent document cited in search report | | Publication date | Patent family member(s) | Publication date |
|---|---|---|---|---|
| JP 2001213623 | A | 07-08-2001 | NONE | |
| JP 2005239461 | A | 08-09-2005 | NONE | |
| JP 2004037228 | A | 05-02-2004 | NONE | |

EPO FORM P0459

## REFERENCES CITED IN THE DESCRIPTION

**Patent documents cited in the description**

- JP 6275263 A
- JP 2001213622 A
- JP 2000302547 A